# EUROPEAN PATENT APPLICATION

(11) **EP 4 203 149 A1**
(43) Date of publication of application: **28.06.2023**
(21) Application number: 22792053.5
(22) Date of filing: 21.04.2022
(51) Int. Cl.: H01M 50/197, H01M 50/198, H01M 50/178

(54) **BATTERY CELL AND BATTERY MODULE INCLUDING SAME**

(30) Priority: 21.04.2021 KR 20210051923
(71) Applicant: LG Energy Solution, Ltd., Seoul 07335 (KR)
(72) Inventor: LIM, Hun-Hee, Daejeon 34122 (KR); KIM, Sang-Hun, Daejeon 34122 (KR); KANG, Min-Hyeong, Daejeon 34122 (KR); SONG, Dae-Woong, Daejeon 34122 (KR); YU, Hyung-Kyun, Daejeon 34122 (KR); HWANG, Soo-Ji, Daejeon 34122 (KR)
(74) Representative: Plasseraud IP
(86) International application number: PCT/KR2022/005751
(87) International publication number: WO 2022/225355

(57) **Abstract**

Disclosed is a battery cell, which includes a battery case having an accommodation portion in which an electrode assembly is mounted, and a sealing portion formed by sealing an outer periphery thereof; an electrode lead electrically connected to an electrode tab included in the electrode assembly and protruding out of the battery case via the sealing portion; and a lead film located at a portion corresponding to the sealing portion in at least one of an upper portion and a lower portion of the electrode lead, wherein the lead film includes a first adhesive layer and a second adhesive layer, and a moisture removal layer is located between the first adhesive layer and the second adhesive layer, and the moisture removal layer includes a getter material.

## Description

### TECHNICAL FIELD

The present application claims priority to Korean Patent Application No. 10-2021-0051923 filed on April 21, 2021 in the Republic of Korea.

The present disclosure relates to a battery cell and a battery module including the same, and more particularly, to a battery cell capable of suppressing penetration of moisture into the battery cell while having improved external emission of gas generated inside the battery cell, and a battery module including the same.

### BACKGROUND ART

As technology development and demand for mobile devices increase, the demand for secondary batteries as an energy source is rapidly increasing. In particular, secondary batteries are of great interest as energy sources not only for mobile devices such as mobile phones, digital cameras, notebooks and wearable devices, but also for power devices such as electric bicycles, electric vehicles and hybrid electric vehicles.

Depending on the shape of a battery case, these secondary batteries are classified into a cylindrical battery and a prismatic battery in which a battery assembly is included in a cylindrical or prismatic metal can, and a pouch-type battery in which the battery assembly is included in a pouch-type case of an aluminum laminate sheet. Here, the battery assembly included in the battery case is a power element including a positive electrode, a negative electrode, and a separator interposed between the positive electrode and the negative electrode, and capable of charging and discharging, and is classified into a jelly-roll type in which long sheet-type positive and negative electrodes coated with an active material are wound with a separator being interposed therebetween, and a stack type in which a plurality of positive and negative electrodes are sequentially stacked with a separator being interposed therebetween.

Among them, in particular, a pouch-type battery in which a stack-type or stack/folding-type battery assembly is included in a pouch-type battery case made of an aluminum laminate sheet is being used more and more due to low manufacturing cost, small weight, and easy modification.

However, as the energy density of the battery cell increases in recent years, there is a problem that the amount of gas generated inside the battery cell also increases. In particular, if the gas generated inside the battery cell is not easily discharged, a venting may occur in the battery cell due to gas generation. Also, even if a separate venting portion is included in the battery cell, moisture may penetrate into the battery cell through the venting portion, which may cause deterioration of battery performance and additional gas generation due to resultant side reactions. Accordingly, there is an increasing need to develop a battery cell capable of preventing penetration of external moisture into the battery cell while having improved external emission of gas generated inside the battery cell.

### DISCLOSURE

### Technical Problem

The present disclosure is designed to solve the problems of the related art, and therefore the present disclosure is directed to providing a battery cell capable of suppressing penetration of external moisture into the battery cell while having improved external emission of gas generated inside the battery cell, and a battery module including the same.

The object to be solved by the present disclosure is not limited to the above-mentioned object, and the objects not mentioned here may be clearly understood by those skilled in the art from this specification and the accompanying drawings.

### Technical Solution

In one aspect of the present disclosure, there is provided a battery cell, comprising: a battery case having an accommodation portion in which an electrode assembly is mounted, and a sealing portion formed by sealing an outer periphery thereof; an electrode lead electrically connected to an electrode tab included in the electrode assembly and protruding out of the battery case via the sealing portion; and a lead film located at a portion corresponding to the sealing portion in at least one of an upper portion and a lower portion of the electrode lead, wherein the lead film includes a first adhesive layer and a second adhesive layer, and a moisture removal layer is located between the first adhesive layer and the second adhesive layer, and the moisture removal layer includes a getter material.

The getter material may include at least one of calcium oxide (CaO), lithium chloride (LiCl), silica (SiO₂), barium oxide (BaO), barium (Ba), and calcium (Ca).

The getter material may have a structure of metal organic framework (MOF).

The moisture removal layer may further include a polyolefin-based resin.

The moisture removal layer may further include polypropylene.

The moisture removal layer may have a thickness of 60 µm or more.

The moisture removal layer may include 0.01 weight% to 80 weight% of the getter material, based on the total weight of the moisture removal layer.

The first adhesive layer may include a polyolefin-based resin.

The first adhesive layer may include polypropylene treated with maleic anhydride (MAH).

The first adhesive layer may have gas permeability of 20 Barrer to 60 Barrer at 60°C.

The first adhesive layer may have a thickness of 60 µm or more.

The second adhesive layer may include a polyolefin-based resin.

The second adhesive layer may have gas permeability of 20 Barrer to 60 Barrer at 60°C.

The second adhesive layer may have a thickness of 60 µm or more.

The first adhesive layer may be adhered to an outer surface of the electrode lead, and the second adhesive layer may be adhered to an inner surface of the sealing portion.

The lead film may include a first lead film and a second lead film, the first lead film may be located at an upper portion of the electrode lead, and the second lead film may be located at a lower portion of the electrode lead.

An end of the first adhesive layer included in the first lead film may be in contact with an end of the first adhesive layer included in the second lead film.

In another aspect of the present disclosure, there is also provided a battery module, comprising the battery cell described above.

### Advantageous Effects

According to embodiments, the present disclosure provides a battery cell including an electrode lead to which a lead film of a multilayer structure is attached, and a battery module including the same, and thus may improve the external discharge of gas generated inside the battery cell and suppress the penetration of moisture into the battery cell.

The effect of the present disclosure is not limited to the above effects, and the effects not mentioned here will be clearly understood by those skilled in the art from this specification and the accompanying drawings.

### DESCRIPTION OF DRAWINGS

FIG. 1 is a top view showing a battery cell according to an embodiment of the present disclosure.
FIG. 2 is a perspective view showing an electrode lead and a lead film included in the battery cell of FIG. 1.
FIG. 3 is an exploded perspective view showing the electrode lead and the lead film of FIG. 2.
FIG. 4 is a cross-sectional view showing the lead film included in the battery cell of FIG. 1.

### BEST MODE

Hereinafter, with reference to the accompanying drawings, various embodiments of the present disclosure will be described in detail so as to be easily implemented by those skilled in the art. The present disclosure may be implemented in various different forms and is not limited to the embodiments described herein.

In order to clearly explain the present disclosure, parts irrelevant to the description are omitted, and identical or similar components are endowed with the same reference signs throughout the specification.

In addition, since the size and thickness of each component shown in the drawings are arbitrarily expressed for convenience of description, the present disclosure is not necessarily limited to the drawings. In order to clearly express various layers and regions in the drawings, the thicknesses are enlarged. Also, in the drawings, for convenience of explanation, the thickness of some layers and regions is exaggerated.

In addition, throughout the specification, when a part "includes" a certain component, it means that other components may be further included, rather than excluding other components, unless otherwise stated.

In addition, throughout the specification, when referring to "top view", it means that the target part is viewed from above, and when referring to "cross-sectional view", it means that a vertically-cut section of the target part is viewed from a side.

Hereinafter, a battery module according to an embodiment of the present disclosure will be described. However, here, the description will be made based on front surface among the front and rear surfaces of the battery module, but it is not necessarily limited thereto, and the same or similar contents may be described in the case of the rear surface.

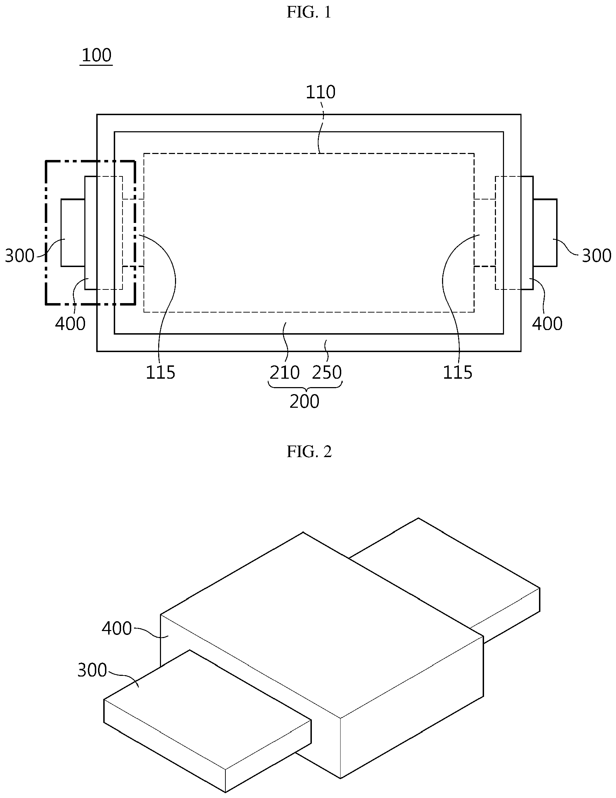

FIG. 1 is a top view showing a battery cell according to an embodiment of the present disclosure.

Referring to FIG. 1, the battery cell 100 according to this embodiment includes a battery case 200, an electrode lead 300, and a lead film 400.

The battery case 200 includes an accommodation portion 210 in which an electrode assembly 110 is mounted, and a sealing portion 250 formed by sealing an outer periphery thereof. The sealing portion 250 may be sealed by heat, laser, or the like. The battery case 200 may be a laminate sheet including a resin layer and a metal layer. More specifically, the battery case 200 may be made of a laminate sheet, and may include an outer resin layer forming the outermost layer, a barrier metal layer preventing penetration of materials, and an inner resin layer for sealing.

Also, the electrode assembly 110 may have a structure of a jelly-roll type (winding type), a stack type (lamination type), or a composite type (stack/folding type). More specifically, the electrode assembly 110 may include a positive electrode, a negative electrode, and a separator disposed therebetween.

Hereinafter, the electrode lead 300 and the lead film 400 will be mainly described.

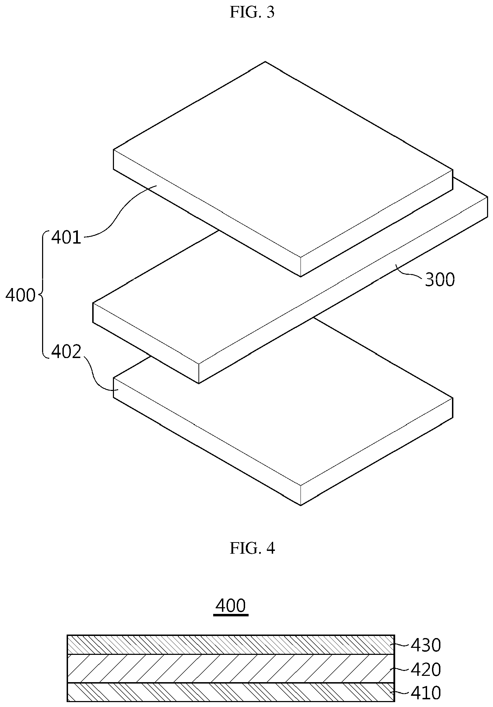

FIG. 2 is a perspective view showing an electrode lead and a lead film included in the battery cell of FIG. 1. FIG. 3 is an exploded perspective view showing the electrode lead and the lead film of FIG. 2.

Referring to FIGS. 1 and 2, the electrode lead 300 is electrically connected to an electrode tab 115 included in the electrode assembly 110, and protrudes out of the battery case 200 via the sealing portion 250. In addition, the lead film 400 is located at a portion corresponding to the sealing portion 250 in at least one of an upper portion and a lower portion of the electrode lead 300. Accordingly, the lead film 400 may improve the sealing properties of the sealing portion 250 and the electrode lead 300 while preventing a short circuit from occurring in the electrode lead 300 during thermal fusion.

In addition, the lead film 400 may have a wider width than the electrode lead 300. The lead film 400 may have a greater length than the sealing portion 250, but may have a smaller length than the electrode lead 300. Accordingly, the lead film 400 may prevent the side surface of the electrode lead 300 from being exposed to the outside without interfering with the electrical connection of the electrode lead 300. In this specification, the width of the lead film 400 refers to a maximum value of the distance between one end and the other end of the lead film 400 based on the direction perpendicular to the protruding direction of the electrode lead 300, and the width of the electrode lead 300 refers to a maximum value of the distance between one end and the other end of the electrode lead 300 based on the direction perpendicular to the protruding direction of the electrode lead 300. The length of the lead film 400 refers to a maximum value of the distance between one end and the other end of the lead film 400 based on the protruding direction of the electrode lead 300, and the length of the sealing portion 250 refers to a maximum value of the distance between one end and the other end of the sealing portion 250 based on the protruding direction of the electrode lead 300. The length of the electrode lead 300 refers to a maximum value of the distance between one end and the other end of the electrode lead 300 based on the protruding direction of the electrode lead 300.

Referring to FIGS. 2 and 3, the lead film 400 may include a first lead film 401 and a second lead film 402, the first lead film 401 may be located at the upper portion of the electrode lead 300, and the second lead film 402 may be located at the lower portion of the electrode lead 300. At this time, the electrode lead 300 may be fused together with the sealing portion 250 in a state of being positioned between the first lead film 401 and the second lead film 402. The first lead film 401 and/or the second lead film 402 may be fused together with the sealing portion 250 by heat, laser, or the like. Here, both ends of the first lead film 401 and both ends of the second lead film 402 may be in contact with each other, respectively. In other words, as shown in FIG. 2, both ends of the first lead film 401 and both ends of the second lead film 402 may be integrated with each other, respectively. For example, both ends of the first lead film 401 and both ends of the second lead film 402 may be fused by heat, laser, or the like to be integrated with each other.

Accordingly, the lead film 400 may prevent the side surface of the electrode lead 300 from being exposed to the outside, while improving the sealing properties of the sealing portion 250 and the electrode lead 300.

Hereinafter, the lead film 400 will be described in detail.

FIG. 4 is a cross-sectional view showing the lead film included in the battery cell of FIG. 1.

Referring to FIGS. 1 and 4, the lead film 400 may include a first adhesive layer 410, a moisture removal layer 420, and a second adhesive layer 430. Here, the moisture removal layer 420 may be located between the first adhesive layer 410 and the second adhesive layer 430. In other words, the lead film 400 may have a multilayer structure in which the first adhesive layer 410, the moisture removal layer 420, and the second adhesive layer 430 are stacked in order.

Also, referring to FIGS. 1 and 4, the first adhesive layer 410 may be adhered to the outer surface of the electrode lead 300, and the second adhesive layer 430 may be adhered to the inner surface of the sealing portion 250. That is, the first adhesive layer 410 may include a material easily adhered to the electrode lead 300, and the second adhesive layer 430 may include a material easily adhered to the sealing portion 250.

For example, the first adhesive layer 410 and the second adhesive layer 430 may each include a polyolefin-based resin. The polyolefin-based resin may include polypropylene, polyethylene, polyvinyl difluoride (PVDF), or a mixture thereof. More specifically, the first adhesive layer 410 may include polypropylene treated with maleic anhydride (MAH). Accordingly, the first adhesive layer 410 may be more easily adhered to the electrode lead 300 made of a metal material, and when the internal pressure of the battery cell 100 increases, it may be possible to more easily prevent the interface between the first adhesive layer 410 and the electrode lead 300 from being peeled off.

The gas permeability of the first adhesive layer 410 may be 20 Barrer to 60 Barrer, or 30 Barrer to 40 Barrer at 60°C. For example, the carbon dioxide permeability of the first adhesive layer 410 may satisfy the above range. In addition, the gas permeability may satisfy the above range at 60°C based on the thickness of the first adhesive layer 410 of 200 µm. If the gas permeability of the first adhesive layer 410 satisfies the above range, the gas generated inside the battery cell may be more effectively discharged.

The gas permeability of the second adhesive layer 430 may be 20 Barrer to 60 Barrer, or 30 Barrer to 40 Barrer at 60°C. For example, the carbon dioxide permeability of the second adhesive layer 430 may satisfy the above range. In addition, the gas permeability may satisfy the above range at 60°C based on the thickness of the second adhesive layer 430 of 200 µm. If the gas permeability of the second adhesive layer 430 satisfies the above range, the gas generated inside the battery cell may be more effectively discharged.

In this specification, the gas permeability may be measured by ASTM F2476-20.

In addition, referring to FIGS. 3 and 4, when the lead film 400 includes the first lead film 401 and the second lead film 402, the end of the first adhesive layer 410 included in the first lead film 401 may be in contact with the end of the first adhesive layer 410 included in the second lead film 402. In other words, as shown in FIG. 2, both ends of the first lead film 401 and both ends of the second lead film 402 are fused to each other, respectively, and the end of the first adhesive layer 410 of the first lead film 401 and the end of the first adhesive layer 40 of the second lead film 402 may be integral with each other.

Accordingly, the lead film 400 may prevent the side surface of the electrode lead 300 from being exposed to the outside, while improving the sealing properties of the sealing portion 250 and the electrode lead 300.

The first adhesive layer 410 may have a thickness of 60 µm or more. If the thickness of the first adhesive layer 410 satisfies the aforementioned range, it may be easier to prevent film deformation from occurring during the manufacturing process.

The second adhesive layer 430 may have a thickness of 60 µm or more. If the thickness of the second adhesive layer 430 satisfies the aforementioned range, it may be easier to prevent film deformation from occurring during the manufacturing process.

In addition, the moisture removal layer 420 may include a getter material. Here, the getter material may refer to a material capable of evacuating a gas using the action that gas is absorbed by a chemically activated metal film. For example, the getter material may include at least one of calcium oxide (CaO), lithium chloride (LiCl), silica (SiO₂), barium oxide (BaO), barium (Ba), and calcium (Ca). As another example, the getter material may have a structure of a metal organic framework (MOF). However, the getter material is not limited thereto, and may include all kinds of materials generally classified as getter materials.

Accordingly, the moisture removal layer 420 including the getter material may minimize the penetration of moisture introduced into the battery cell 100 from the outside of the battery cell 100 and allow the gas to be easily discharged to the outside due to the high gas permeability.

The moisture removal layer 420 may include a polyolefin-based resin in addition to the getter material. The polyolefin-based resin may include polypropylene, polyethylene, polyvinyl difluoride (PVDF), or a mixture thereof.

In addition, the moisture removal layer 420 may include 0.01 weight% to 80 weight%, or 30 weight% to 70 weight% of the getter material, based on the total weight of the moisture removal layer 420. Accordingly, the moisture removal layer 420 may more easily adjust the moisture permeability of moisture introduced into the battery cell 100 from the outside of the battery cell 100 and the gas permeability of gas generated inside the battery cell 100 and discharged to the outside according to the use of the lead film 400 by adjusting the content of the getter material within the above-described range. In addition, it may be easier to prevent the penetration of moisture from the outside of the battery cell 100 into the battery cell 100, and it may be easier to prevent a problem that the interface between the moisture removal layer 420 and the first adhesive layer 410 or the second adhesive layer 430 from being peeled off due to the lowered adhesion with the first adhesive layer 410 and the second adhesive layer 430 when the internal pressure of the battery cell 100 increases. It may also be easier to prevent the quality from deteriorating due to damage such as deformation of the film during the manufacturing process.

The moisture removal layer 420 may have a thickness of 60 µm or more. If the thickness of the moisture removal layer 420 satisfies the aforementioned range, it may be easier to prevent film deformation from occurring during the manufacturing process.

In addition, a battery module according to another embodiment of the present disclosure includes the battery cell described above. Meanwhile, one or more battery modules according to this embodiment may be packaged in a pack case to form a battery pack.

The battery module described above and the battery pack including the same may be applied to various devices. These devices may be transportation means such as electric bicycles, electric vehicles, hybrid electric vehicles, and the like, but the present disclosure is not limited thereto, and the present disclosure may be applied various devices that can use a battery module and a battery pack including the same, which is also within the scope of the right of the present disclosure.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A battery cell, comprising:
a battery case having an accommodation portion in which an electrode assembly is mounted, and a sealing portion formed by sealing an outer periphery thereof;
an electrode lead electrically connected to an electrode tab included in the electrode assembly and protruding out of the battery case via the sealing portion; and
a lead film located at a portion corresponding to the sealing portion in at least one of an upper portion and a lower portion of the electrode lead,
wherein the lead film includes a first adhesive layer and a second adhesive layer, and a moisture removal layer is located between the first adhesive layer and the second adhesive layer, and
the moisture removal layer includes a getter material.

2. The battery cell according to claim 1,
wherein the getter material includes at least one of calcium oxide (CaO), lithium chloride (LiCl), silica (SiO₂), barium oxide (BaO), barium (Ba), and calcium (Ca).

3. The battery cell according to claim 1,
wherein the getter material has a structure of metal organic framework (MOF).

4. The battery cell according to claim 1,
wherein the moisture removal layer further includes a polyolefin-based resin.

5. The battery cell according to claim 1,
wherein the moisture removal layer further includes polypropylene.

6. The battery cell according to claim 1,
wherein the moisture removal layer has a thickness of 60 µm or more.

7. The battery cell according to claim 4,
wherein the moisture removal layer includes 0.01 weight% to 80 weight% of the getter material, based on the total weight of the moisture removal layer.

8. The battery cell according to claim 1,
wherein the first adhesive layer includes a polyolefin-based resin.

9. The battery cell according to claim 1,
wherein the first adhesive layer includes polypropylene treated with maleic anhydride (MAH).

10. The battery cell according to claim 1,
wherein the first adhesive layer has gas permeability of 20 Barrer to 60 Barrer at 60°C.

11. The battery cell according to claim 1,
wherein the first adhesive layer has a thickness of 60 µm or more.

12. The battery cell according to claim 1,
wherein the second adhesive layer includes a polyolefin-based resin.

13. The battery cell according to claim 1,
wherein the second adhesive layer has gas permeability of 20 Barrer to 60 Barrer at 60°C.

14. The battery cell according to claim 1,
wherein the second adhesive layer has a thickness of 60 µm or more.

15. The battery cell according to claim 1,
wherein the first adhesive layer is adhered to an outer surface of the electrode lead, and
the second adhesive layer is adhered to an inner surface of the sealing portion.

16. The battery cell according to claim 1,
wherein the lead film includes a first lead film and a second lead film,
the first lead film is located at an upper portion of the electrode lead, and
the second lead film is located at a lower portion of the electrode lead.

17. The battery cell according to claim 16,
wherein an end of the first adhesive layer included in the first lead film is in contact with an end of the first adhesive layer included in the second lead film.

18. A battery module, comprising the battery cell according to any one of claims 1 to 17.
